# EUROPÄISCHE PATENTANMELDUNG

(11) **EP 4 778 392 A1**
(43) Veröffentlichungstag der Anmeldung: **22.07.2026**
(21) Anmeldenummer: 25152333.8
(22) Anmeldetag: 16.01.2025
(51) Int. Cl.: A21B 1/48, A21B 5/02

(54) **ANORDNUNG UND BACKOFEN ZUR HERSTELLUNG VON WAFFELN**

(71) Anmelder: Bühler Wafer Solutions GmbH, 2100 Leobendorf (AT)
(72) Erfinder: Kalss, Georg, 1080 Wien (AT); Lindner, Michael, 1180 Wien (AT)
(74) Vertreter: Puchberger & Partner Patentanwälte

(57) **Zusammenfassung**

Verfahren, Anordnung und Backofen zur Herstellung von Waffeln in beheizten und an einem Endlosförderer (20) durch den Backofen beförderten Überdruckbackformen (2), umfassend:
- eine Backplatte (3), die auf einer ihrer Seiten eine Backfläche (4) und auf ihrer gegenüberliegenden Seite eine Rückenfläche (5) aufweist,
- und eine Induktionsheizung (6) zur Beheizung einer vorbeifahrenden Backplatte (3) über ihre Rückenfläche (5),
- wobei die Rückenfläche (5) der Backplatte (3) ein von einer Ebene abweichendes Profil (8) aufweist,
- wobei das Induktionsmodul eine vom Profil (8) dieser Rückenfläche (5) abweichende Kontur (7) aufweist,
- wobei das Profil (8) und die Kontur (7) derart ausgestaltet sind, dass zwischen der Rückenfläche (5) und der Induktionsheizung (6) ein Induktorspalt (10) mit variablem Spaltabstand (26) freigehalten ist,
- und dass auf der Backplatte (3) Bereiche unterschiedlicher Beheizung gebildet sind.

## Beschreibung

Die Erfindung betrifft eine Anordnung und einen Backofen gemäß den Merkmalen der unabhängigen Patentansprüche.

Insbesondere betrifft die Erfindung das technische Gebiet von Backöfen zur industriellen Herstellung von Waffelprodukten, bei denen eine im Wesentlichen flüssige Backmasse, die im unausgebackenen Zustand etwa 45-70% Wasser enthält, zwischen zwei Backplatten unter Überdruck zu einem Waffelblatt ausgebacken wird. Die dadurch hergestellten Waffeln sind insbesondere Waffelzwischenprodukte, die als Flachwaffeln oder Hohlwaffeln bekannt sind.

Dabei kommen spezielle Backöfen zum Einsatz, bei denen entlang eines Endlosförderers auf- und zuklappbare Backplattenvorrichtungen, insbesondere Backzangen, vorgesehen sind, die in ihrer zugeklappten Stellung jeweils eine Backform bilden. Die Backplattenvorrichtungen werden entlang des Endlosförderers kontinuierlich durch den Backofen gefördert und dabei wird auf jeweils eine aufgeklappte Backplattenvorrichtung eine flüssige Backmasse aufgetragen. In weiterer Folge werden die Backplattenvorrichtungen geschlossen, verriegelt und in einen heißen Backbereich befördert. In weiterer Folge wird das Backprodukt in der geschlossenen Backplattenvorrichtung ausgebacken. Anschließend wird die geschlossene Backplattenvorrichtung geöffnet, sodass das Backprodukt entnommen werden kann. In weiterer Folge beginnt der Zyklus von neuem.

Bei der Herstellung derartiger Flachwaffeln oder Hohlwaffeln wird eine flüssige Backmasse mit einem Wasseranteil von etwa 50-70% unter hohem Druck ausgebacken. Die flüssige Backmasse wird in der Regel von einem sogenannten Aufgießer streifenförmig aufgegossen und die Backplattenvorrichtung wird geschlossen. Dabei wird die flüssige Backmasse schlagartig erhitzt. Das Wasser der Backmasse entweicht in Form von Wasserdampf sehr rasch und hinterlässt dabei eine poröse, spröde Struktur. Bei einem üblichen Waffelblatt im Format 350 x 500 mm werden hierbei mehr als 50 Liter Wasserdampf freigesetzt.

Ein weiterer Effekt dieser Backtechnologie ist, dass sich die flüssige Backmasse durch die schlagartige Verdampfung des Wasseranteils entlang der gesamten Backform ausbreitet und verteilt. Das fertige Produkt weist dann z.B. eine Dicke von etwa 0,5 bis 2 mm und eine exakte, in der Regel rechteckige, Form auf. Dabei soll das Waffelblatt nicht nur die exakte vorbestimmte Form, Dicke und Struktur aufweisen, sondern sie muss auch noch einen homogenen Ausbackgrad haben.

Zur Verbesserung der Effizienz derartiger Backöfen kann eine herkömmliche Gasbeheizung durch eine elektrische Heizung, insbesondere durch eine Induktionsheizung, ersetzt werden. Die dazu bekannten Konstruktionen umfassen im Wesentlichen geradlinig verlaufende Induktionsheizmodule, die über einen Induktorspalt auf die vorbeifahrenden Backplatten wirken, um diese induktiv aufzuheizen. Die dabei erzielbare induktive Beheizung der Backplatten ist stark von dem Spaltabstand des Induktorspalts abhängig. Je näher der Induktor an der Rückenfläche der vorbeifahrenden Backplatte positioniert ist, also je kleiner der Spaltabstand des Induktorspalts ausgebildet ist, desto effizienter kann die Heizung der Backplatte erfolgen.

Aus diesem Grund wird bei herkömmlichen, gattungsgemäßen Backöfen die Rückenfläche der Backplatten ebenenförmig und so glatt wie möglich ausgebildet. Die Ausgestaltung der Rückenfläche der Backplatten in Form einer Ebene ermöglicht es, den Induktorspalt zwischen der Induktionsheizung und den vorbeifahrenden Backplatten klein und konstant einzustellen, was für die Effizienz der induktiven Beheizung bisher als optimal galt.

Grundsätzlich zeichnen sich induktiv beheizte Waffelbacköfen im Vergleich zu Waffelbacköfen mit konventioneller Gasheizung durch Backplatten mit höherer Masse aus, da zur Realisierung eines hohen Wirkungsgrades der elektrischen Induktion die Rückseiten der Backplatten glatt und insbesondere nicht, wie aus gasbeheizten Waffelöfen bekannt, gerippt ausgeführt werden. Dies resultiert in einem gegenüber Backplatten für gasbeheizte Waffelöfen signifikant höherem Energieinhalt der Backplatten und somit einem für das Erreichen der gewünschten Backflächentemperatur erhöhten Energiebedarf.

Überraschend wurde nun aber festgestellt, dass es für die Effizienz eines gattungsgemäßen Backofens bei gewissen Betriebsweisen vorteilhaft sein kann, wenn die Rückenflächen der Backplatten nicht-ebenenförmig ausgebildet sind.

Für gattungsgemäße Backöfen gibt es in der Praxis unterschiedliche Betriebsarten. Manche Backöfen werden durchgehend über mehrere Wochen und Monate betrieben, wobei kontinuierlich immer dasselbe Produkt hergestellt wird. Andere Backöfen werden in kürzeren Intervallen betrieben, weil beispielsweise in regelmäßigen Abständen ein Produktwechsel und damit auch ein Wechsel der Backplatten erfolgt oder weil schlichtweg ein 24-Stunden-Betrieb nicht notwendig ist. Manche Backöfen werden zur Herstellung von komplex ausgeformten Hohlwaffeln verwendet, andere wiederum für Waffeln mit unterschiedlichen Waffelblattdicken.

Überraschend hat sich bei Versuchen herausgestellt, dass durch eine geeignete Wahl des Profils der Rückenfläche eine Verbesserung der Effizienz des Backofens für unterschiedliche Anwendungen erfolgen kann.

Folglich kann es vorteilhaft sein, lokale Steigerungen der thermischen Reaktivität oder lokale Steigerungen der thermischen Speicherfähigkeit auf der Backfläche bei induktiv beheizten Waffelbacköfen zu bewirken. In der Regel resultieren Bereiche mit reduzierter Backplattendicke in einer gesteigerten thermischen Reaktivität und Bereiche mit größerer Backplattendicke in einer gesteigerten thermischen Speichermasse.

Größere Spaltabstände resultieren in einem kleineren Wärmestrom, kleinere Spaltabstände in einem größeren Wärmestrom.

Bei induktiver Beheizung eines Waffelbackofens erfolgt der Energieeintrag von der Induktionsheizung, insbesondere deren Induktor, in den Ofen primär durch die Induktion in die Rückenfläche der Backplatte. Im Gegensatz dazu erfolgt bei gasbeheizten Waffelbacköfen ein Teil des Energieeintrags auch durch Konvektion direkt in den Ofenkörper. Deshalb ist das Erreichen des thermischen Gleichgewichts nach dem Ofen-Start zwischen Backplatten und dem restlichen Ofen bei induktiv beheizten Waffelöfen gegenüber gasbeheizten Öfen gegebenenfalls verlängert, was zu stärkeren Schwankungen in der Waffelblattqualität zu Beginn des Backprozesses führt.

Bei konventionellen Backplatten ist aufgrund der gleichmäßigen Backplattendicke eine heterogene Temperaturverteilung auf der Backfläche, wie sie z.B. beim gleichzeitigen Backen mehrerer vereinzelter Produkte auf einer Backplatte vorteilhaft wäre, nur in sehr begrenztem Ausmaß realisierbar.

Während herkömmliche induktiv beheizte Backöfen mit glatter Rückenfläche zur Optimierung eines rein stationär betrachteten Prozesses oder einer möglichst gleichmäßigen Beheizung ausgelegt sind, soll die vorliegende Erfindung durch eine flexible Gestaltungsmöglichkeit eine weitere Effizienzsteigerung erzielen.

Aufgabe der Erfindung ist es somit, die Nachteile des Standes der Technik zu überwinden.

Die erfindungsgemäße Aufgabe wird insbesondere durch die Merkmale der unabhängigen Patentansprüche gelöst.

Offenbart wird eine Anordnung für einen Backofen zur Herstellung von Waffeln in beheizten und an einem Endlosförderer entlang einer Bewegungsrichtung durch den Backofen beförderten Überdruckbackformen, umfassend:
- mindestens eine Backplatte, die auf einer ihrer Seiten eine Backfläche zur Begrenzung einer der Überdruckbackformen und auf ihrer gegenüberliegenden Seite eine Rückenfläche aufweist,
- und eine Induktionsheizung mit mindestens einem Induktionsmodul zur Beheizung einer vorbeifahrenden Backplatte über ihre Rückenfläche.

Bevorzugt ist vorgesehen, dass die Rückenfläche der Backplatte ein von einer Ebene abweichendes Profil aufweist.

Bevorzugt ist vorgesehen, dass das mindestens eine Induktionsmodul eine vom Profil dieser Rückenfläche abweichende Kontur aufweist bzw. nachbildet.

Bevorzugt ist vorgesehen, dass das Profil der Rückenfläche der Backplatte und die Kontur der Induktionsheizung derart ausgestaltet sind, dass, im eingebauten Zustand, zwischen der vorbeifahrenden Rückenfläche der Backplatte und der Induktionsheizung ein Induktorspalt mit variablem Spaltabstand freigehalten ist.

Bevorzugt ist vorgesehen, dass auf der Backplatte Bereiche unterschiedlicher Beheizung dadurch gebildet sind, dass der Spaltabstand (26) des Induktorspalts zwischen Rückenfläche der Backplatte und der Induktionsheizung in einem ersten Bereich kleiner ist als in einem zweiten Bereich.

Gegebenenfalls ist vorgesehen, dass die Kontur des mindestens einen Heizmoduls, bevorzugt die Konturen aller Induktionsmodule, einen im Wesentlichen geradlinigen bzw. ebenen Verlauf haben.

Gegebenenfalls ist vorgesehen, dass an der Backplatte eine Hauptachse definiert ist, die der Bewegungsrichtung der Backform durch den Backofen entspricht.

Gegebenenfalls ist vorgesehen, dass das Profil der Rückenfläche der Backplatte in einer Normalebene dieser Hauptachse liegt.

Gegebenenfalls ist vorgesehen, dass das Profil der Rückenfläche der Backplatte in einer Längsebene dieser Hauptachse liegt.

Gegebenenfalls ist vorgesehen, dass sich das Profil der Rückenfläche der Backplatte im Verlauf der Backplatte entlang der Hauptachse ändert.

Gegebenenfalls ist vorgesehen, dass der Induktorspalt einen sich über dessen Verlauf ändernden Spaltabstand aufweist.

Gegebenenfalls ist vorgesehen, dass die Rückenfläche der Backplatte ein abgestuftes Profil aufweist.

Gegebenenfalls ist vorgesehen, dass die Rückenfläche der Backplatte ein wannenförmiges Profil aufweist.

Gegebenenfalls ist vorgesehen, dass die Rückenfläche der Backplatte ein mittig aufgewölbtes Profil aufweist.

Gegebenenfalls ist vorgesehen, dass der Spaltabstand zwischen der Induktionsheizung und der Rückenfläche der vorbeifahrenden Backplatte in einem ersten Bereich größer ausgebildet ist als in einem zweiten Bereich der Backplatte.

Gegebenenfalls ist vorgesehen, dass die Induktionsheizung und die Rückenfläche derart ausgestaltet sind, dass der Spaltabstand zwischen der Induktionsheizung und der Rückenfläche der vorbeifahrenden Backplatte in einem ersten Bereich größer ausgebildet ist als in einem zweiten Bereich der Backplatte.

Gegebenenfalls ist vorgesehen, dass die Induktionsheizung derart ausgestaltet ist, dass sie, im eingebauten Zustand, die Rückenfläche der vorbeifahrenden Backplatte sowohl im ersten Bereich als auch im zweiten Bereich beheizt.

Gegebenenfalls ist vorgesehen, dass ein erster Bereich im Randbereich vorgesehen ist, womit der Spaltabstand im Randbereich größer ausgebildet ist als im Mittenbereich. Gegebenenfalls ist vorgesehen, dass ein erster Bereich im Mittenbereich vorgesehen ist, womit der Spaltabstand im Mittenbereich größer ausgebildet ist als im Randbereich.

Gegebenenfalls ist vorgesehen, dass die Backplatte als selbsttragende Backplatte ausgebildet ist, die in ihren seitlichen Endabschnitten Aufnahmen zur Montage von Verbindungsmitteln wie beispielsweise für ein Scharnier oder für eine Verriegelungsvorrichtung aufweist.

Gegebenenfalls ist vorgesehen, dass die selbsttragende Backplatte bzw. die Backplattenvorrichtung rahmenlos ausgebildet ist.

Gegebenenfalls ist vorgesehen, dass die Backplatte eine Spannvorrichtung zur Vorspannung der Backplatte gegen die von der Überdruckbackform ausgehenden Druckkräfte umfasst.

Gegebenenfalls ist vorgesehen, dass die Anordnung als Nachrüstsatz für einen Backofen zur Herstellung von Waffeln in beheizten und an einem Endlosförderer durch den Backofen beförderten Überdruckbackformen ausgebildet ist.

Gegebenenfalls ist vorgesehen, dass der Nachrüstsatz zum Ersatz mindestens einer Backplatte und mindestens einer Induktionsheizung ausgebildet ist.

Offenbart wird ein Backofen zur Herstellung von Waffeln.

Es ist vorteilhaft, wenn mehrere Backplattenvorrichtungen vorgesehen sind, die jeweils ein Paar von Backplatten zur Bildung einer Überdruckbackform aufweisen.

Gegebenenfalls ist vorgesehen, dass die Backplatten jeweils auf einer ihrer Seiten eine Backfläche zur Begrenzung der Überdruckbackform und auf ihrer gegenüberliegenden Seite eine Rückenfläche aufweisen.

Gegebenenfalls ist vorgesehen, dass mindestens ein Endlosförderer vorgesehen ist, der die Backplattenvorrichtungen durch den Backofen befördert.

Gegebenenfalls ist vorgesehen, dass eine Induktionsheizung zur Beheizung der Rückenfläche der vorbeifahrenden Backplatten vorgesehen ist.

Bevorzugt ist vorgesehen, dass die Backplatten und die Induktionsheizung als Anordnung gemäß der Offenbarung ausgebildet sind.

Gegebenenfalls umfasst der Backofen einen oder mehrere der folgenden Bereiche:
- einen Backmassenauftragsbereich zum Auftrag einer Backmasse auf eine geöffnete Backplattenvorrichtung,
- einen Schließbereich zum Schließen der Backplattenvorrichtung,
- einen Backraum zum Backen der Waffeln in den geschlossenen Backplattenvorrichtungen, in dem mindestens eine Induktionsheizung zur Beheizung der im Backraum befindlichen Backplattenvorrichtungen vorgesehen ist,
- einen Öffenbereich zum Öffnen der Backplattenvorrichtungen,
- einen Waffelentnahmebereich zur Entnahme der gebackenen Waffeln aus den geöffneten Backplattenvorrichtungen.

Offenbart wird ein Verfahren zur Herstellung von Waffeln mit einer beschriebenen Anordnung und insbesondere in einem beschriebenen Backofen zur Herstellung von Waffeln in beheizten und an einem Endlosförderer entlang einer Bewegungsrichtung durch den Backofen beförderten Überdruckbackformen:
- wobei eine Induktionsheizung mit mindestens einem Heizmodul eine vorbeifahrende Backplatte beheizt,
- wobei die Backplatte auf einer ihrer Seiten eine Backfläche zur Begrenzung einer der Überdruckbackformen und auf ihrer gegenüberliegenden Seite eine Rückenfläche aufweist,
- wobei die Backplatte von der Induktionsheizung über ihre Rückenfläche beheizt wird.

Bevorzugt ist vorgesehen, dass die induktive Beheizung über eine Rückenfläche der Backplatte erfolgt, die ein von einer Ebene abweichendes Profil aufweist.

Bevorzugt ist vorgesehen, dass die induktive Beheizung über ein Induktionsmodul erfolgt, das eine vom Profil dieser Rückenfläche abweichende Kontur aufweist bzw. nachbildet.

Bevorzugt ist vorgesehen, dass das Profil der Rückenfläche der Backplatte und die Kontur der Induktionsheizung derart ausgestaltet sind, dass, im eingebauten Zustand, zwischen der vorbeifahrenden Rückenfläche der Backplatte und der Induktionsheizung ein Induktorspalt mit variablem Spaltabstand freigehalten wird.

Bevorzugt ist vorgesehen, dass auf der Backplatte Bereiche unterschiedlicher Beheizung dadurch gebildet werden, dass der Spaltabstand (26) des Induktorspalts zwischen Rückenfläche der Backplatte und der Induktionsheizung in einem ersten Bereich kleiner ist als in einem zweiten Bereich.

Bevorzugt ist vorgesehen, dass mindestens ein Endlosförderer vorgesehen ist, der, die Backplatten umfassende, Backplattenvorrichtungen durch den Backofen und insbesondere durch folgende Bereiche befördert:
- einen Backmassenauftragsbereich zum Auftrag einer Backmasse auf eine geöffnete Backplattenvorrichtung,
- einen Schließbereich zum Schließen der Backplattenvorrichtung,
- einen Backraum zum Backen der Waffeln in den geschlossenen Backplattenvorrichtungen, in dem mindestens eine Induktionsheizung zur Beheizung der im Backraum befindlichen Backplattenvorrichtungen vorgesehen ist,
- einen Öffenbereich zum Öffnen der Backplattenvorrichtungen,
- und einen Waffelentnahmebereich zur Entnahme der gebackenen Waffeln aus den geöffneten Backplattenvorrichtungen.

Die Backplattendicke ist bevorzugt der Normalabstand zwischen der Abschlussebene der Backfläche und der Rückenfläche. Die Abschlussebene ist bevorzugt jene gedachte Ebene, mit der die Backplatte bzw. deren Backfläche abschließt. Alternativ kann die Teilungsebene der beiden Backplatten in der Backplattenvorrichtung als Abschlussebene angenommen werden. Gegebenenfalls kann diese Abschlussebene durch Ausbuchtungen zur Bildung von Hohlwaffeln überragt werden. Die Annahme einer Abschlussebene wird dazu verwendet, die Dicke der Backplatte zu definieren. Hierbei sollen aber Ausbuchtungen oder Einbuchtungen zur Bildung der Form des zu backenden Produktes unberücksichtigt bleiben. Die Dicke entspricht bevorzugt dem Normalabstand zwischen Abschlussebene der Backfläche und der Rückenfläche.

An der Backplatte sind gegebenenfalls Elemente einer Spannvorrichtung vorgesehen, die meist in der Rückenfläche versenkt sind. Diese Elemente können bei der Definition der Rückenfläche bzw. deren Profil unberücksichtigt bleiben.

Durch die offenbarten Anordnungen und Backöfen können insbesondere folgende Effekte erzielt werden:
Es kann für den thermischen Wirkungsgrad von induktiv beheizten Waffelbacköfen beispielsweise vorteilhaft sein, wenn in unterschiedlichen Bereichen der Backplatten ein unterschiedlicher Wärmestrom vorliegt. Beispielsweise kann an den Rändern ein anderer Wärmestrom vorliegen, als im Mittenbereich der Backplatte.

Beispielsweise kann eine Beschleunigung der Einstellung des thermischen Gleichgewichts im Backprozess bei induktiv beheizten Waffelbacköfen durch Backplatten mit an den Rändern im Vergleich zur Mitte gesteigertem Wärmestrom bewirkt werden.

Beispielsweise kann eine lokale Variation des Wärmestroms bei induktiv beheizten Waffelbacköfen durch Waffelbackplatten bewirkt werden, bei denen sich die Backplatte aus Bereichen mit unterschiedlicher Dicke und dadurch lokal unterschiedlichem Luftspalt zum Induktionsmodul der Induktionsheizung zusammensetzt.

Offenbart wird eine induktiv beheizte Backplatte mit Bereichen unterschiedlicher Backplattendicke zur gezielten Beeinflussung der Wärmeströme bzw. der Temperaturgradienten vom Ort der Induktion, also vorranging an der Rückenfläche der Backplatte in andere Bereiche der Backplatte, insbesondere die Backfläche im Kontaktbereich zum Backgut sowie die Kontaktflächen mit weiteren Komponenten der Backzange wie Verschluss- und Scharnierteile.

Zwischen der Induktionsheizung und einer vorbeifahrenden Backplatte ist ein Induktionsspalt freigehalten. Dieser Induktionsspalt weist einen Spaltabstand auf. Durch die nicht-ebenenförmige Ausgestaltung der Rückenfläche ist der Spaltabstand in einem ersten Bereich kleiner als der Spaltabstand in einem zweiten Bereich. Durch den größeren Spaltabstand wird der zweite Bereich der Backplatte weniger stark beheizt als der erste Bereich, bei dem der Spaltabstand kleiner ist. Dadurch kann rein durch die Ausgestaltung der Rückenfläche der Backplatte eine bereichsweise, individuell gesteuerte Beheizung der Backplatte erfolgen.

Grundsätzlich können Bereiche unterschiedlicher Spaltabstände zusätzlich oder alternativ auch dadurch geschaffen werden, dass die Induktionsheizung, bzw. deren Kontur, keinen geradlinigen Verlauf aufweist, sondern eine Stufe, eine Abschrägung oder eine Abrundung umfasst.

Durch die Gestaltung der Rückenfläche der Backplatte wird ein lokal unterschiedlicher Luftspalt bzw. Induktorspalt zwischen Induktor und Rückenfläche realisiert.

In Bereichen mit größerem Spaltabstand wird der Wärmestrom in der Backplatte abgeschwächt. Dies wird z.B. durch die Kombination mehrerer Bereiche auf der Rückenfläche erreicht, die sich durch unterschiedliche Backplattendicken auszeichnen.

Die Rückenfläche kann dabei in jedem der Bereiche unterschiedlich geformt sein, wobei sie in Bezug auf den Induktor parallel, geneigt oder auch gekrümmt sein können.

Die Backplatten weisen auf der Backplattenrückseite bevorzugt mindestens zwei Bereiche mit unterschiedlichem oder variablem Spaltabstand auf.

Dadurch wird ein Induktorspalt zwischen Rückenfläche der Backplatte und Induktionsheizung realisiert, der für jeden Bereich unterschiedlich sein kann. Bei Bereichen, die nicht parallel zum Induktor ausgeführt sind, ist der Spaltabstand des Induktorspalts auch innerhalb des jeweiligen Bereichs nicht konstant.

Die Rückenfläche umfasst bevorzugt mehrere Bereiche, die parallel, geneigt oder gekrümmt sein können bzw. ist auch eine stetige Krümmung über die gesamte Rückenfläche möglich.

Durch die gezielte Variation des Wärmestroms durch unterschiedliche Spaltabstände bzw. Backplattendicken kann eine gezielte, bereichsweise Steuerung der Backflächentemperatur an einer Backplatte im Backbetrieb realisiert werden. Beispielsweise kann ein erhöhter Energiebedarf in Bereichen des Teigaufgusses kompensiert werden.

Die Backplatten weisen bevorzugt quer zur und/oder längs der Hauptachse Bereiche unterschiedlicher Backplattendicke auf. Diese Bereiche können parallel zur Backfläche ausgeführt und durch entsprechende Stufen, senkrecht oder auch geneigt, miteinander verbunden sein.

Die Rückenfläche der Backplatte besteht gegebenenfalls aus mehreren Bereichen bzw. Zonen die parallel zueinander versetzt, geneigt oder gekrümmt sein können bzw. ist auch eine stetige Krümmung über die gesamte Rückenfläche möglich.

Es kann vorteilhaft sein, wenn die Dicke der Backplatte in einem ersten Bereich größer ausgebildet ist als in einem zweiten Bereich der Backplatte und insbesondere wenn die Kontur der Induktionsheizung an diesen Dickenunterschied angepasst ist.

Der Dickenunterschied beträgt bevorzugt mehr als 1 mm, mehr als 2 mm, bevorzugt mehr als 3 mm. Der Dickenunterschied beträgt gegebenenfalls weniger als 30 mm, weniger als 20 mm und insbesondere weniger als 10 mm.

Bevorzugt ist vorgesehen, dass der Spaltabstand in einem ersten Bereich größer ausgebildet ist als in einem zweiten Bereich der Backplatte.

Gemäß einer Ausführungsform beträgt der minimale Spaltabstand 1 mm bis 15mm, bevorzugt etwa 3 mm bis 7mm. Der maximal mögliche Spaltabstand entspricht dem minimalen Spaltabstand plus der Dicke der Backplatte.

Die maximale Dicke einer geeigneten Backplatte beträgt, je nach Anwendung, beispielsweise zwischen 20 mm und bis 100mm, bevorzugt 60 mm bis 90 mm.

Die minimale Dicke einer geeigneten Backplatte beträgt, je nach Anwendung, beispielsweise 10 mm bis 90mm.

Bevorzugt beträgt die minimale Dicke der Backplatte höchstens 10 mm weniger als die maximale Dicke der Backplatte.

In weiterer Folge wird die Erfindung anhand von Ausführungsbeispielen weiter beschrieben.
Fig. 1 zeigt eine schematische Schnittdarstellung der Grundkomponenten eines möglichen gattungsgemäßen Backofens.
Fig. 2 zeigt eine schematische Schrägansicht einer möglichen Ausführungsform einer Backplattenvorrichtung.

Die Fig. 3a - 3e zeigen schematische Schnittdarstellungen unterschiedlicher Ausführungsformen einer Anordnung.

Wenn nicht anders angegeben, so entsprechen die Bezugszeichen folgenden Komponenten: Bewegungsrichtung 1, Überdruckbackform 2, Backplatte 3, Backfläche 4, Rückenfläche 5, Induktionsheizung 6, Kontur (der Induktionsheizung) 7, Profil (der Rückenfläche) 8, Hauptachse 9, Induktorspalt 10, Dicke (der Backplatte) 11, äußere Abschlussebene 12, erster Bereich 13, zweiter Bereich 14, Aufnahme (für Verbindungsmittel) 15, Scharnier 16, Verriegelungsvorrichtung 17, Spannvorrichtung 18, Backplattenvorrichtung 19, Endlosförderer 20, Backmassenauftragsbereich 21, Schließbereich 22, Backraum 23, Öffenbereich 24, Waffelentnahmebereich 25, Spaltabstand 26.

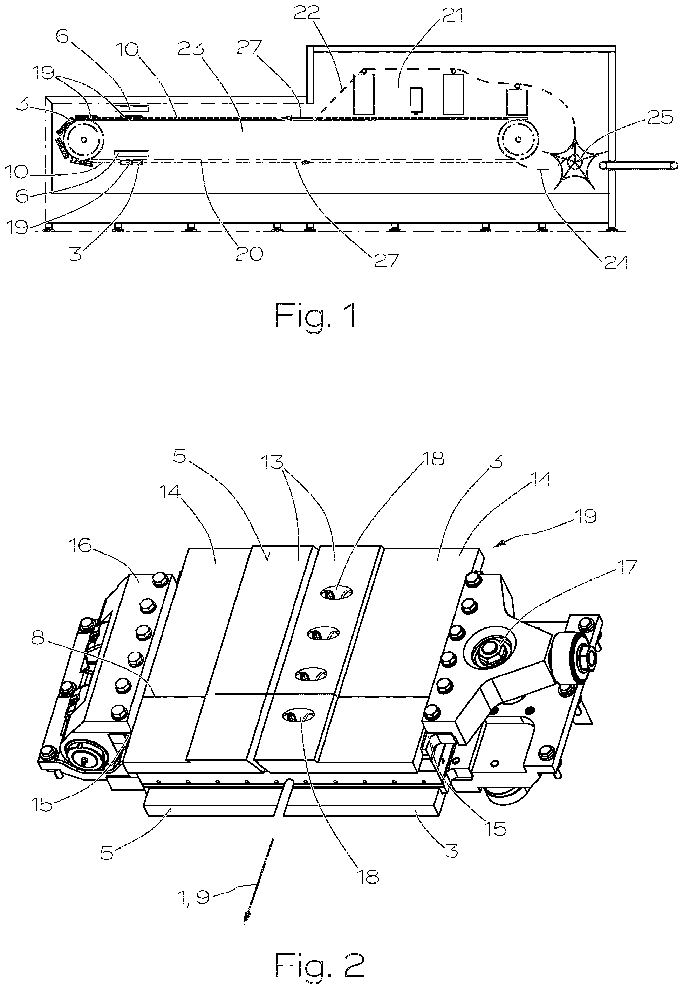

**Fig. 1** zeigt eine schematische Schnittdarstellung einer möglichen Ausführungsform eines Backofens zur Herstellung von Waffeln. Bei diesem Backofen sind mehrere Backplattenvorrichtungen 19 vorgesehen. Die Backplattenvorrichtungen 19 sind an einem Endlosförderer 20 angebracht oder anbringbar, wodurch sie entlang einer Bewegungsrichtung 1 durch den Backofen transportiert werden. Insbesondere werden die Backplattenvorrichtungen 19 und deren Backplatten 3 durch einen Backmassenauftragsbereich 21 zum Auftrag einer Backmasse auf die geöffnete Backplattenvorrichtung 19, weiter in einen Schließbereich 22 zum Schließen der Backplattenvorrichtungen 19, weiter durch einen Backraum 23 zum Backen der Waffeln in den geschlossenen Backplattenvorrichtungen 19, weiter in einen Öffenbereich 24 zum Öffnen der Backplattenvorrichtungen 19 und in einen Waffelentnahmebereich 25 zum Entnehmen der gebackenen Waffeln befördert. In weiterer Folge beginnt der Durchlauf erneut.

Im Backraum 23 ist eine Induktionsheizung 6 vorgesehen. Diese Induktionsheizung ist dazu ausgebildet, die Backplatten 3 der Backplattenvorrichtung 19 induktiv zu erwärmen. Die Induktionsheizung 6 ist bevorzugt stillstehend im oder am Backofen angebracht und beheizt die an der Induktionsheizung 6 vorbeifahrenden Backplatten 3. Um dies zu ermöglichen, ist zwischen den vorbeifahrenden Backplatten 3 und der Induktionsheizung 6 ein Induktorspalt 10 freigehalten. Bevorzugt umfasst der Backofen eine mehrteilige Induktionsheizung 6, beispielsweise eine Induktionsheizung 6, die mehrere Heizmodule umfasst. In der vorliegenden Figur sind schematisch zwei Heizmodule der Induktionsheizung 6 dargestellt. Insbesondere ist ein Teil der Induktionsheizung 6 entlang der oberen Transportebene der Backplattenvorrichtungen 19 und ein anderer Teil der Induktionsheizung 6 entlang der unteren Transportebene der Backplattenvorrichtungen 19 vorgesehen. An den Umlenkpunkten des Endlosförderers 20 wird dieser umgelenkt. Bevorzugt werden hier auch die an dem Endlosförderer 20 angebrachten Backplattenvorrichtungen 19 und deren Backplatten gewendet. Dadurch können die Abschnitte der Induktionsheizung 6 immer von oben auf die Backplattenvorrichtungen 19 wirken und dennoch werden, durch das Wenden der Backplattenvorrichtungen 19 bei den Umlenkpunkten, beide Backplatten 3 der Backplattenvorrichtung 19 beheizt. Alternativ oder zusätzlich können Teile der Induktionsheizung 6 von unten auf die vorbeifahrenden Backplattenvorrichtungen 19 wirken.

Die Induktionsheizung 6 und die Backplatten 3 der Backplattenvorrichtungen 19 können dabei als Anordnung bzw. als System angesehen werden. Insbesondere müssen die Backplatten 3 und die Induktionsheizung 6 aufeinander abgestimmt sein, sodass der Induktorspalt 10 die gewünschte Form aufweist.

Die Anordnung aus Induktionsheizung 6 und Backplatten 3 kann beispielsweise ein Nachrüstsatz sein, der bei einem Backofen eine bestehende Anordnung aus Heizung und Backplatte ersetzt. Dadurch kann die Effizienz eines Backofens verbessert werden. Grundsätzlich kann die Anordnung aber auch von Anfang an in den Backofen eingebaut sein.

In allen Ausführungsformen ist bevorzugt vorgesehen, dass im Backmassenauftragsbereich 21 ein Aufgießer zum Aufgießen einer flüssigen bzw. flüssig bis pastösen Backmasse angeordnet ist. Die Backmasse ist bevorzugt eine Waffelbackmasse.

Bevorzugt ist die Backplattenvorrichtung 19 derart ausgebildet, dass sie eine Überdruckbackform 2 bilden kann.

**Fig. 2** zeigt eine schematische Schrägansicht einer möglichen Ausführungsform einer Backplattenvorrichtung 19.

Die Backplattenvorrichtung 19 umfasst zwei Backplatten 3, insbesondere eine obere Backplatte 3 und eine untere Backplatte 3. Die Backplatten 3 umfassen jeweils eine außenliegende Rückenfläche 5. Auf der gegenüberliegenden Seite der Backplatte 3 ist jeweils eine Backfläche 4 vorgesehen, die in der geschlossenen Stellung der Backplattenvorrichtung 19 nicht sichtbar ist. Wenn die Backplatten 3 einer Backplattenvorrichtung 19 geschlossen und verriegelt sind, ist zwischen den Backplatten 3 eine ebenfalls nicht sichtbare Überdruckbackform 2 gebildet. Der Überdruck ergibt sich durch den eingangs beschriebenen Backprozess.

Die Backplatten 3 umfassen bevorzugt Aufnahmen 15 für Verbindungsmittel zur Bildung der Backplattenvorrichtung 19. Im vorliegenden Fall ist hierfür ein Scharnier 16 und eine Verriegelungsvorrichtung 17 vorgesehen. Über das Scharnier 16 kann die Backplattenvorrichtung 19 auf- und zugeklappt werden. Über die Verriegelungsvorrichtung 17 kann die Backplattenvorrichtung 19 in ihrem geschlossenen Zustand verriegelt werden. Alternativ kann beispielsweise eine Parallelführung der Backplatten 3 einer Backplattenvorrichtung 19 vorgesehen sein, wobei hier ein Scharnier 16 entfällt, jedoch bevorzugt mindestens eine Verriegelungsvorrichtung 17 vorgesehen ist.

Weitere Komponenten einer Backplattenvorrichtung 19, wie beispielsweise Verbindungsmittel zur Verbindung mit dem Endlosförderer oder Rollen zur Bildung eines Backzangenwagens, können herkömmlich ausgestaltet sein.

Die obenliegende Backplatte 3 und bevorzugt auch die untenliegende Backplatte 3 umfasst eine Rückenfläche 5, deren Profil 8 von der Form einer Ebene abweicht. Die Form des Profils 8 ist schematisch durch eine eingezeichnete Linie dargestellt. Insbesondere wird das Profil 8 durch die äußere Kontur der Rückenfläche 5 der Backplatte 3 bestimmt.

Die betrachtete Kontur liegt dabei beispielsweise in einer Normalebene der Hauptachse 9 der Backplatte 3 bzw. der Backplattenvorrichtung 19 oder in einer anderen Schnittebene. Die Hauptachse 9 entspricht jener Achse, entlang derer auch die Bewegungsachse 1 in einem Backofen verläuft. In der vorliegenden Ausführungsform ist das Profil stufenförmig ausgebildet. Dadurch sind ein erster Bereich 13 und ein zweiter Bereich 14 gebildet.

Jedoch kann das Profil 8, je nach gewünschtem Effekt, auch andersförmig ausgebildet sein, wie in den nachfolgenden Figuren beispielhaft beschrieben wird.

Die Backplattenvorrichtung ist bevorzugt in allen Ausführungsformen als selbsttragende Backplattenvorrichtung ausgebildet. Die Backplatten 3 dienen dabei auch der Verbindung der beiden seitlichen Verbindungsmittel, im vorliegenden Fall also dem Scharnier 16 mit der Verriegelungsvorrichtung 17. Die Backplatten 3 bilden somit ein tragendes Element der Struktur der Backplattenvorrichtung 19. Ein Tragrahmen für die Backplatten 3 kann bei einer selbsttragenden Backplattenvorrichtung entfallen. Selbsttragende Backplattenvorrichtungen 19 sind in der Regel rahmenlos ausgebildet. Hierzu ist es vorteilhaft, wenn die Backplattenvorrichtungen 19, und insbesondere deren Backplatten 3, eine Spannvorrichtung 18 umfassen mit der die Backplatten 3 gegen den in der Überdruckbackform 2 entstehenden Überdruck vorspannbar sind. In der vorliegenden Ausführungsform ist hierzu in der Rückenfläche der Backplatte 3 eine Nut ausgenommen, die über mehrere Stellschrauben zusammengezogen werden kann. Hierdurch kann die Backplatte Richtung Überdruckbackform 2 vorgespannt bzw. gegebenenfalls vorgewölbt werden. Diese Elemente können bei der Definition der Rückenfläche 5 bzw. deren Profil 8 unberücksichtigt bleiben.

Insbesondere kann die Backplattenvorrichtung 19 in allen Ausführungsformen eine herkömmliche Backplattenvorrichtung 19 sein, die jedoch eine Backplatte 3 umfasst, deren Rückenfläche 5 ein spezielles Profil 8 aufweist.

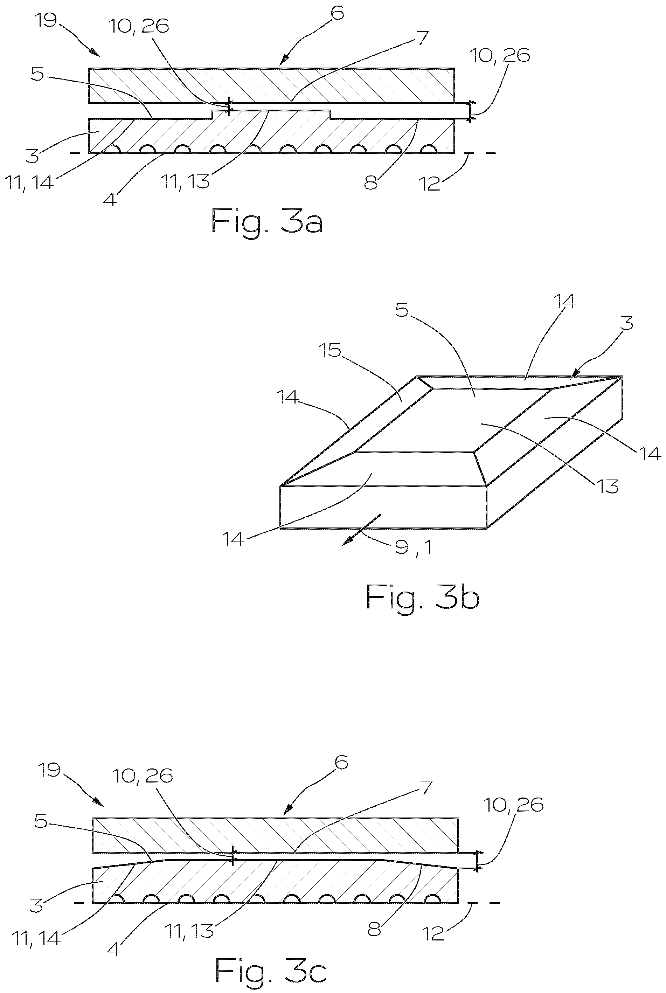

Die **Fig. 3a** - **3e** zeigen unterschiedliche Ausführungen von Anordnungen bzw. deren Komponenten in schematischen Ansichten und Schnittdarstellungen.

**Fig. 3a** zeigt eine schematische Schnittdarstellung einer möglichen Ausführungsform einer Anordnung. Die Anordnung umfasst eine Backplatte 3, die auf einer ihrer Seiten eine Backfläche 4 und auf der anderen, gegenüberliegenden Seite eine Rückenfläche 5 umfasst. Die Rückenfläche 5 ist bei der Beheizung einer Induktionsheizung 6 zugewandt, wobei die Induktionsheizung in dieser Ausführungsform ein durchgehendes Heizmodul umfasst. Die Induktionsheizung 6 bzw. dessen Heizmodul weist in der vorliegenden Ausführungsform eine geradlinige Kontur 7 auf. Dadurch ist die Kontur 7 der Induktionsheizung 6 bzw. deren Heizmodul an jener Seite, die den vorbeifahrenden Backplatten 3 zugewandt ist, ebenenförmig bzw. geradlinig ausgebildet.

Die Bewegungsrichtung 1 der Backplatten 3 bzw. die Hauptachse 9 der Backplatte 3 verläuft in dieser Darstellung projizierend.

Die Backplatte 3 weist eine Rückenfläche 5 auf, deren Profil 8 nicht ebenenförmig ist, sondern eine mittige Erhebung aufweist. Die Rückenfläche 5 weicht somit vom Verlauf einer Ebene ab.

Zwischen der Induktionsheizung 6 und einer vorbeifahrenden Backplatte 3 ist ein Induktionsspalt 10 freigehalten. Dieser Induktionsspalt 10 weist einen Spaltabstand 26 auf. Durch die nicht-ebenenförmige Ausgestaltung der Rückenfläche 5 ist der Spaltabstand 26 in einem ersten Bereich 13 kleiner als der Spaltabstand 26 in einem zweiten Bereich 14. Durch den größeren Spaltabstand wird der zweite Bereich 14 der Backplatte 3 weniger stark beheizt als der erste Bereich 13, bei dem der Spaltabstand 26 geringer ist. Dadurch kann rein durch die Ausgestaltung der Rückenfläche 5 der Backplatte 3 eine bereichsweise, individuell gesteuerte Beheizung der Backplatte 3 erfolgen. Beispielsweise kann es vorteilhaft sein, den Mittenbereich der Backplatte 3 stärker zu beheizen, da in diesem Bereich der Teigaufguss der kühlen Backmasse erfolgt.

Die Rückenfläche 5 in Fig. 3a ist stufenförmig ausgebildet. Insbesondere kann das dargestellte Profil 8 der Rückenfläche 5 entlang der Hauptachse 9 verändert oder konstant ausgestaltet sein.

**Fig. 3b** zeigt eine schematische Schrägansicht einer möglichen Ausgestaltung einer Backplatte 3. Diese Backplatte 3 weist eine Rückenfläche 5 auf, die von der Form einer Ebene abweicht. Insbesondere ist ein erster Bereich 13 vorgesehen, der zusammen mit einer nicht dargestellten Induktionsheizung 6 einen kleineren Spaltabstand 26 bewirkt. Zusätzlich ist mindestens ein zweiter Bereich 14 vorgesehen, in dem der Spaltabstand 26 mit einer nicht dargestellten Induktionsheizung 6 größer ist als im ersten Bereich 13.

Die Backplatte 3, bzw. deren Rückenfläche 5, ist im Randbereich abgeschrägt und/oder nach außen verjüngend ausgestaltet. Diese Abschrägungen verlaufen nicht nur in einer Normalebene der Hauptachse 9, sondern auch in einer Längsebene der Hauptachse 9. Insbesondere kann die Backplatte 3 an mehreren oder allen Abschlusskanten der Rückenfläche 5 abgeschrägt bzw. dünner ausgestaltet sein als im Mittenbereich.

Durch diese Ausgestaltung haben die Backplatten 3 eine flache, pyramidenstumpfförmige Form.

**Fig. 3c** zeigt eine schematische Schnittdarstellung einer Anordnung, in der eine Backplatte 3 ähnlich der aus Fig. 3b vorgesehen ist. In dieser schematischen Darstellung sieht man, dass der Spaltabstand 26 im zweiten Bereich 14 größer ist als im ersten Bereich 13. Die Anordnung bzw. die Form der Rückenfläche 5 wirkt ähnlich der Form der Rückenfläche aus Fig. 3a, wobei die induktiv übertragene Heizleistung bei der Abschrägung entlang deren Verlauf graduell abnimmt.

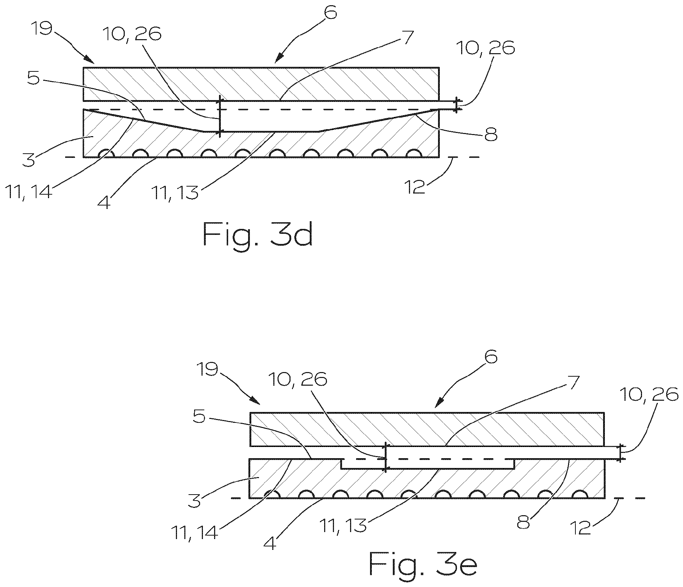

**Fig. 3d** zeigt eine weitere schematische Schnittdarstellung einer Anordnung, ähnlich jener aus den Figuren 3a und 3c, wobei in Fig. 3d die Rückenfläche 5 derart ausgestaltet ist, dass die Backplatte im Mittenbereich dünner ausgestaltet ist als im Seitenbereich. Dadurch ist der Spaltabstand 26 im Mittenbereich größer als im Randbereich. Diese wannenförmige Ausgestaltung kann dazu führen, dass die Ränder der Backplatte 3 durch die Induktionsheizung stärker aufgeheizt werden als der Mittenbereich. Dies kann beispielsweise einen Wärmeverlust der Backplatten im Randbereich ausgleichen oder auch beim Aufheizen des Backofens eine Beschleunigung der Aufheizung dieses Bereichs bewirken.

**Fig. 3e** zeigt eine weitere schematische Schnittdarstellung, die wiederum ähnlich ausgestaltet ist wie Fig. 3d, wobei die Wannenform der Rückenfläche 5 nicht durch eine Abschrägung, sondern durch eine Stufenform gebildet ist.

In analoger Weise können die Rückenflächen 5 in nicht dargestellten Ausgestaltungen abgeschrägt, abgerundet, oder stufenförmig ausgebildet sein. Die unterschiedlichen Dicken der Backplatte 3 können dabei ein Profil 8 ergeben, das entlang der Hauptachse 9 unverändert ist, wie es beispielsweise in Fig. 2 dargestellt ist, oder auch ein entlang der Hauptachse 9 variables Profil 8 aufweisen, wie es beispielsweise in Fig. 3b dargestellt ist.

## Patentansprüche

1. **Anordnung** für einen Backofen zur Herstellung von Waffeln in beheizten und an einem Endlosförderer (20) entlang einer Bewegungsrichtung (1) durch den Backofen beförderten Überdruckbackformen (2), umfassend:
- mindestens eine Backplatte (3), die auf einer ihrer Seiten eine Backfläche (4) zur Begrenzung einer der Überdruckbackformen (2) und auf ihrer gegenüberliegenden Seite eine Rückenfläche (5) aufweist,
- und eine Induktionsheizung (6) mit mindestens einem Induktionsmodul zur Beheizung einer vorbeifahrenden Backplatte (3) über ihre Rückenfläche (5), **dadurch gekennzeichnet,**
- **dass** die Rückenfläche (5) der Backplatte (3) ein von einer Ebene abweichendes Profil (8) aufweist,
- **dass** das mindestens eine Induktionsmodul eine vom Profil (8) dieser Rückenfläche (5) abweichende Kontur (7) aufweist bzw. nachbildet,
- **dass** das Profil (8) der Rückenfläche (5) der Backplatte (3) und die Kontur (7) der Induktionsheizung (6) derart ausgestaltet sind, dass, im eingebauten Zustand, zwischen der vorbeifahrenden Rückenfläche (5) der Backplatte (3) und der Induktionsheizung (6) ein Induktorspalt (10) mit variablem Spaltabstand (26) freigehalten ist,
- und **dass** auf der Backplatte (3) Bereiche unterschiedlicher Beheizung dadurch gebildet sind, dass der Spaltabstand (26) des Induktorspalts (10) zwischen Rückenfläche (5) der Backplatte (3) und der Induktionsheizung (6) in einem ersten Bereich (13) kleiner ist als in einem zweiten Bereich (14).

2. Anordnung nach Anspruch 1, **dadurch gekennzeichnet, dass** die Kontur (7) des mindestens einen Heizmoduls, bevorzugt die Konturen (7) aller Induktionsmodule, einen im Wesentlichen geradlinigen bzw. ebenen Verlauf haben.

3. Anordnung nach Anspruch 1 oder 2, **dadurch gekennzeichnet, dass** an der Backplatte (3) eine Hauptachse (9) definiert ist, die der Bewegungsrichtung (1) der Backform durch den Backofen entspricht,
- wobei das Profil (8) der Rückenfläche (5) der Backplatte (3) in einer Normalebene dieser Hauptachse (9) liegt
- und/oder wobei das Profil (8) der Rückenfläche (5) der Backplatte (3) in einer Längsebene dieser Hauptachse (9) liegt.

4. Anordnung nach einem der Ansprüche 1 bis 3, **dadurch gekennzeichnet, dass** sich das Profil (8) der Rückenfläche (5) der Backplatte (3) im Verlauf der Backplatte (3) entlang der Hauptachse (9) ändert.

5. Anordnung nach einem der Ansprüche 1 bis 4, **dadurch gekennzeichnet, dass** der Induktorspalt (10) einen sich über dessen Verlauf ändernden Spaltabstand (26) aufweist.

6. Anordnung nach einem der Ansprüche 1 bis 5, **dadurch gekennzeichnet,**
- **dass** die Rückenfläche (5) der Backplatte (3) ein abgestuftes Profil (8) aufweist,
- oder dass die Rückenfläche (5) der Backplatte (3) ein wannenförmiges Profil (8) aufweist,
- oder dass die Rückenfläche (5) der Backplatte (3) ein mittig aufgewölbtes Profil (8) aufweist.

7. Anordnung nach einem der Ansprüche 1 bis 5, **dadurch gekennzeichnet,**
- **dass** die Induktionsheizung (6) und die Rückenfläche (5) derart ausgestaltet sind, dass der Spaltabstand (26) zwischen der Induktionsheizung (6) und der Rückenfläche (5) der vorbeifahrenden Backplatte (3) in einem ersten Bereich (13) größer ausgebildet ist als in einem zweiten Bereich (14) der Backplatte (3),
- und **dass** die Induktionsheizung (6) derart ausgestaltet ist, dass sie, im eingebauten Zustand, die Rückenfläche (5) der vorbeifahrenden Backplatte (3) sowohl im ersten Bereich (13) als auch im zweiten Bereich (14) beheizt.

8. Anordnung nach Anspruch 7, **dadurch gekennzeichnet,**
- **dass** ein erster Bereich (13) im Randbereich vorgesehen ist, womit der Spaltabstand (26) im Randbereich größer ausgebildet ist als im Mittenbereich,
- oder dass ein erster Bereich (13) im Mittenbereich vorgesehen ist, womit der Spaltabstand (26) im Mittenbereich größer ausgebildet ist als im Randbereich.

9. Anordnung nach einem der Ansprüche 1 bis 8, **dadurch gekennzeichnet,**
- **dass** die Backplatte (3) als selbsttragende Backplatte (3) ausgebildet ist, die in ihren seitlichen Endabschnitten Aufnahmen (15) zur Montage von Verbindungsmitteln wie beispielsweise für ein Scharnier (16) oder für eine Verriegelungsvorrichtung (17) aufweist,
- wobei die selbsttragende Backplatte (3) bevorzugt rahmenlos ausgebildet ist.

10. Anordnung nach einem der Ansprüche 1 bis 9, **dadurch gekennzeichnet, dass** die Backplatte (3) eine Spannvorrichtung (18) zur Vorspannung der Backplatte (3) gegen die von der Überdruckbackform (2) ausgehenden Druckkräfte umfasst.

11. Anordnung nach einem der vorangegangenen Ansprüche, die als **Nachrüstsatz** für einen Backofen zur Herstellung von Waffeln in beheizten und an einem Endlosförderer (20) durch den Backofen beförderten Überdruckbackformen (2) ausgebildet ist, wobei der Nachrüstsatz zum Ersatz mindestens einer Backplatte (3) und mindestens einer Induktionsheizung (6) ausgebildet ist.

12. **Backofen** zur Herstellung von Waffeln,
- wobei mehrere Backplattenvorrichtungen (19) vorgesehen sind, die jeweils ein Paar von Backplatten (3) zur Bildung einer Überdruckbackform (2) aufweisen,
- wobei die Backplatten (3) jeweils auf einer ihrer Seiten eine Backfläche (4) zur Begrenzung der Überdruckbackform (2) und auf ihrer gegenüberliegenden Seite eine Rückenfläche (5) aufweisen,
- wobei mindestens ein Endlosförderer (20) vorgesehen ist, der die Backplattenvorrichtungen (19) durch den Backofen befördert,
- und wobei eine Induktionsheizung (6) zur Beheizung der Rückenfläche (5) der vorbeifahrenden Backplatten (3) vorgesehen ist,
**dadurch gekennzeichnet,**
- **dass** die Backplatten (3) und die Induktionsheizung (6) als Anordnung gemäß einem der Ansprüche 1 bis 11 ausgebildet sind.

13. Backofen nach Anspruch 12 umfassend:
- einen Backmassenauftragsbereich (21) zum Auftrag einer Backmasse auf eine geöffnete Backplattenvorrichtung (19),
- einen Schließbereich (22) zum Schließen der Backplattenvorrichtung (19),
- einen Backraum (23) zum Backen der Waffeln in den geschlossenen Backplattenvorrichtungen (19), in dem mindestens eine Induktionsheizung (6) zur Beheizung der im Backraum (23) befindlichen Backplattenvorrichtungen (19) vorgesehen ist,
- einen Öffenbereich (24) zum Öffnen der Backplattenvorrichtungen (19),
- und einen Waffelentnahmebereich (25) zur Entnahme der gebackenen Waffeln aus den geöffneten Backplattenvorrichtungen (19).

14. **Verfahren** zur Herstellung von Waffeln mit einer Anordnung gemäß einem der Ansprüche 1 bis 11 und insbesondere in einem Backofen zur Herstellung von Waffeln in beheizten und an einem Endlosförderer (20) entlang einer Bewegungsrichtung (1) durch den Backofen beförderten Überdruckbackformen (2) nach einem der Ansprüche 12 oder 13:
- wobei eine Induktionsheizung (6) mit mindestens einem Heizmodul eine vorbeifahrende Backplatte (3) beheizt,
- wobei die Backplatte (3) auf einer ihrer Seiten eine Backfläche (5) zur Begrenzung einer der Überdruckbackformen und auf ihrer gegenüberliegenden Seite eine Rückenfläche (5) aufweist,
- wobei die Backplatte (3) von der Induktionsheizung (6) über ihre Rückenfläche (5) beheizt wird,
**dadurch gekennzeichnet,**
- **dass** die induktive Beheizung über eine Rückenfläche (5) der Backplatte (3) erfolgt, die ein von einer Ebene abweichendes Profil (8) aufweist,
- **dass** die induktive Beheizung über ein Induktionsmodul erfolgt, das eine vom Profil (8) dieser Rückenfläche (5) abweichende Kontur (7) aufweist bzw. nachbildet,
- **dass** das Profil (8) der Rückenfläche (5) der Backplatte (3) und die Kontur (7) der Induktionsheizung (6) derart ausgestaltet sind, dass, im eingebauten Zustand, zwischen der vorbeifahrenden Rückenfläche (5) der Backplatte (3) und der Induktionsheizung (6) ein Induktorspalt (10) mit variablem Spaltabstand (26) freigehalten wird,
- und **dass** auf der Backplatte (3) Bereiche unterschiedlicher Beheizung dadurch gebildet werden, dass der Spaltabstand (26) des Induktorspalts (10) zwischen Rückenfläche (5) der Backplatte (3) und der Induktionsheizung (6) in einem ersten Bereich (13) kleiner ist als in einem zweiten Bereich (14).

15. Verfahren nach Anspruch 14, **dadurch gekennzeichnet, dass** mindestens ein Endlosförderer (20) vorgesehen ist, der die Backplatten (3) umfassende Backplattenvorrichtungen (19) durch den Backofen und insbesondere durch folgende Bereiche befördert:
- einen Backmassenauftragsbereich (21) zum Auftrag einer Backmasse auf eine geöffnete Backplattenvorrichtung (19),
- einen Schließbereich (22) zum Schließen der Backplattenvorrichtung (19),
- einen Backraum (23) zum Backen der Waffeln in den geschlossenen Backplattenvorrichtungen (19), in dem mindestens eine Induktionsheizung (6) zur Beheizung der im Backraum (23) befindlichen Backplattenvorrichtungen (19) vorgesehen ist,
- einen Öffenbereich (24) zum Öffnen der Backplattenvorrichtungen (19),
- und einen Waffelentnahmebereich (25) zur Entnahme der gebackenen Waffeln aus den geöffneten Backplattenvorrichtungen (19).
